# EUROPEAN PATENT SPECIFICATION

(11) **EP 3 050 657 B1**
(45) Date of publication and mention of the grant of the patent: **17.01.2018**
(21) Application number: 16153645.3
(22) Date of filing: 01.02.2016
(51) Int. Cl.: B23D 47/04, B27B 27/04, B27B 5/06, B27C 9/04, B27D 5/00, B27M 1/08

(54) **AUTOMATED APPARATUS FOR PROCESSING PANELS MADE OF WOOD-LIKE MATERIAL**
AUTOMATISIERTE VORRICHTUNG ZUR VERARBEITUNG VON TAFELN AUS HOLZÄHNLICHEN WERKSTOFFEN
APPAREIL AUTOMATISÉ DE TRAITEMENT DE MATIÈRE LIGNEUSE FAITE DE PANNEAUX

(30) Priority: 02.02.2015 IT PD20150020
(43) Date of publication of application: 03.08.2016
(73) Proprietor: ESSETRE - S.P.A., 36016 Thiene (VI) (IT)
(72) Inventor: SELLA, Nicola, 36030 FARA VICENTINO VI (IT)
(74) Representative: Modiano, Micaela Nadia

(56) References cited:
- EP-A1- 1 688 227
- EP-A1- 2 098 343
- EP-A1- 2 243 607
- EP-A1- 2 243 619
- EP-A1- 2 353 815
- EP-A1- 2 732 942
- WO-A1-92/12816
- WO-A1-99/33600
- DE-A1-102008 032 159
- GB-A- 1 039 783
- IT-A1- PD20 100 096
- "NEUES CNC-GESTEUERTES BEARBEITUNGSZENTRUM", HOLZ ALS ROH- UND WERKSTOFF, SPRINGER-VERLAG. BERLIN, DE, vol. 47, no. 3, 1 March 1989 (1989-03-01), page 114, XP000009078, ISSN: 0018-3768

## Description

The present invention relates to an automated apparatus for processing panels made of wood-like material according to the preamble of claim 1. Such an apparatus is disclosed by EP 1 688 227 A1. The invention also relates to a machine for cutting such panels, which is inserted in such apparatus.

Nowadays, in order to produce on an industrial scale wood-like panels for the furniture industry, use is made currently of machines and machining centers each of which is dedicated to a specific machining process, for example cutting a panel from a sheet of wood-like material, chipboard or the like, or edging one or more sides of a cut panel, at the entry point to which and at the exit point from which the semi-finished products are manually stored while awaiting a subsequent machining process.

Such a method of production is extremely expensive, both in terms of storage space, necessary for the storage of the semi-finished products exiting from the various machines and machining centers, and in terms of the cost of the labor employed in the movement of the semi-finished products from one machine to the next.

It is very widespread, in periods of low demand from the market, to outsource the cutting to size of panels to third parties who specialize in such single machining process, in order to avoid running the risk, by the company that carries out the finishing of the panel, of having undispatched and unusable stock, with all the attendant unwanted costs.

On the other hand, such solution entails an increase in the cost of the operations to cut the panel to size, which also comprises a heavier cost in terms of transport.

The aim of the present invention is to provide an automated apparatus for machining wood-like panels which is capable of overcoming the above mentioned drawbacks of the known art.

Within this aim, an object of the present invention is to provide an automated apparatus that makes it possible to contain the production costs of a finished panel.

Another object of the invention is to provide an automated apparatus that makes it possible to eliminate the stockrooms of semi-finished products.

Another object of the invention is to provide an automated apparatus that enables a major reduction of the costs of labor.

Another object of the invention is to provide an automated apparatus that can be installed in a relatively contained area.

Another object of the invention is to provide an automated apparatus that is capable of machining a plurality of panels simultaneously.

Another object of the invention is to provide an automated apparatus that is flexible in use and in terms of machined volumes.

Another object of the invention is to provide a machine for cutting panels made of wood-like material, which is integrated in such automated processing apparatus.

This aim and these and other objects which will become better apparent hereinafter are achieved by an automated apparatus for processing panels made of wood-like material, comprising:
- a machine for the longitudinal and transverse cutting to size of a blank panel,
- means for loading blank panels on said cutting machine,
- two edging centers, each one adjacent to one side of two opposite sides of said cutting machine, each edging center comprising two consecutive work tables and single edging means adapted to serve both work tables,
- means for transferring the cut panels to said edging centers and for transferring a partially edged panel from one work table to the other work table of the same edging center.

Further characteristics and advantages of the invention will become better apparent from the detailed description that follows of a preferred, but not exclusive, embodiment of the automatic apparatus according to the invention, which is illustrated for the purposes of non-limiting example in the accompanying drawings wherein:
- Figure 1 is a perspective view of an automatic apparatus according to the invention;

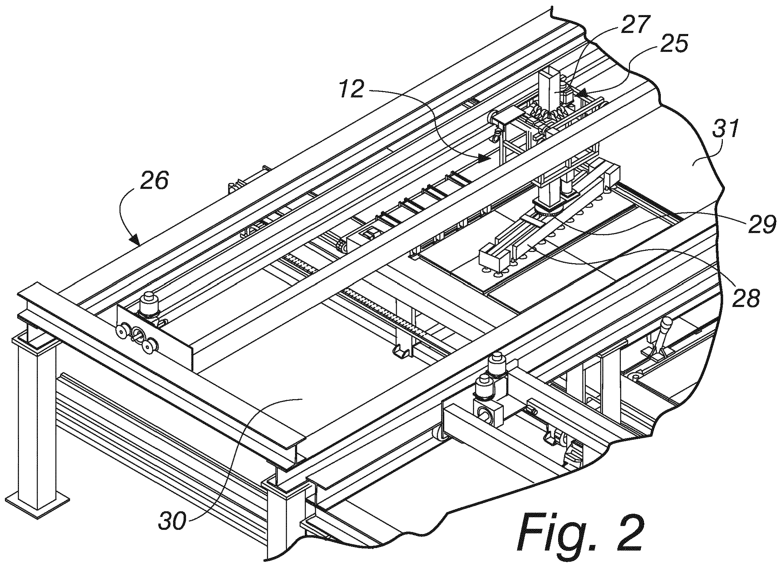

- Figure 2 is a detail of the apparatus according to the invention;
- Figure 3 is a perspective view of a cutting machine forming part of the invention;
- Figure 4 is a perspective view of the cutting machine;
- Figure 5 is a detail of Figure 4;
- Figure 6 is a cross-sectional side view of another detail of the cutting machine of Figures 3, 4 and 5;
- Figure 7 is a cutaway perspective view of a further detail of the cutting machine of Figures 3, 4 and 5;
- Figure 8 is a perspective view of a first work table of the automatic apparatus according to the invention;
- Figure 9 is a cutaway perspective view of the first work table in Figure 8;
- Figure 10 is a perspective view of a second work table of the automatic apparatus according to the invention;
- Figure 11 is a cutaway perspective view of the second work table in Figure 10.

With reference to the figures, an automated apparatus for processing panels made of wood-like material according to the invention is generally designated with the reference numeral 10.

The apparatus 10 comprises:
- a machine 11 for the longitudinal and transverse cutting to size of a blank panel;
- means 12 for loading blank panels on such cutting machine 11;
- two edging centers 13 and 14, each one adjacent to one side of two opposite sides 15 and 16 of the same cutting machine 11;
- each edging center 13 and 14 comprises two consecutive work tables, respectively 17 and 18, 19 and 20, and single edging means 21 and 22 which are adapted to serve both work tables 17, 18, 19, 20 of the respective edging center 13 and 14;
- means 23 and 24 for transferring the cut panels to the edging centers, 13 and 14, and for transferring a partially edged panel from a first work table 17 and 19 to the other, second work table 18 and 20 of the same edging center 13 and 14.

The means 12 for loading blank panels on the cutting machine 11 are constituted by a Cartesian manipulator 25 on a portal 26, the vertical arm 27 of which supports a sucker-carrying frame 28 by way of a rotoidal joint 29.

Below the portal 26, which is above an initial part of the cutting machine 11, there is a region 30 for the blank panels to be loaded on one side of the cutting machine 11, and a region 31 for the discard pieces on the other side of the cutting machine 11.

A machine 11 for the longitudinal and transverse cutting to size of a blank panel is also the subject matter of the present invention.

The cutting machine 11 comprises a work table 32 with a mainly longitudinal extension, means 33 and 34 for moving a loaded panel 35 in a longitudinal direction of extension X of the work table 32, and cutting means 36, supported by means for their movement in a direction Y transverse to the advancement direction X of the loaded panels.

The work table 32 is constituted by a plurality of mutually adjacent sliding panels 37.

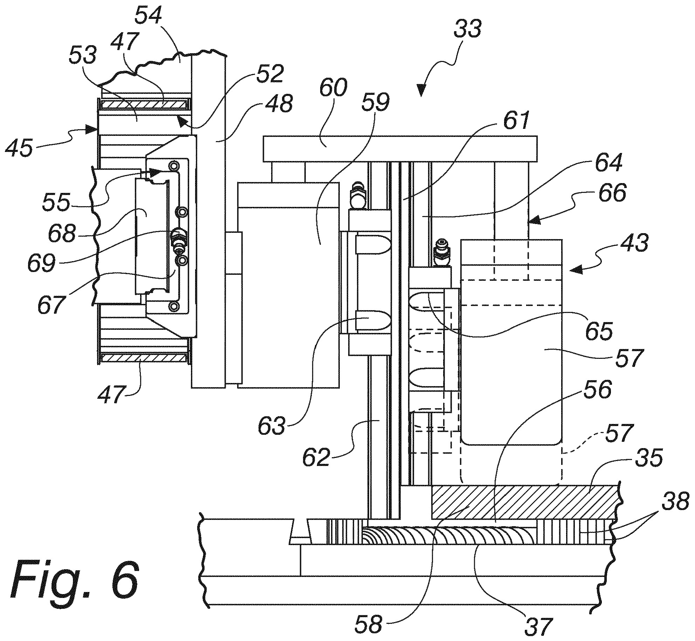

Each sliding panel 37 is constituted by elastically deformable bristles 38, as shown for the purposes of example in Figure 6.

The means 33 and 34 for moving a panel 35 loaded on the work table 32 comprise:
- two sliding portals 39 and 40, a first, entry portal 39 for a panel to be processed and a second, exit portal 40 for a cut panel, which rest on guides 41 for translation in the direction X of the length of the work table 32 and are moved on such translation guides 41 by way of motorized actuator means, for example of the rack and pinion type 42;
- a plurality of grip clamps 43 and 44 respectively, each one of which is mounted on the corresponding sliding portal 39 and 40 with means 45 and 46 for their movement along that sliding portal.

First grip clamps 43 are indicated as belonging to first means 33 for moving a panel, while second clamps 44 are indicated as belonging to second means 34 for moving a panel.

Of the means 33 and 34 for moving a panel 35, the first means 33 are arranged in a first region 50 of the work table 32, which is in front of the cutting means 36, and are designed to push the loaded panel 35 toward the cutting means 36 and to follow it in the same advancement direction during processing; the second means 34 are arranged in a second region 51 of the work table 32, which is to the rear of the cutting means 36, and are designed to entrain the loaded panel 35 away from the cutting means 36 and to accompany it in the same advancement direction during the processing, in order to carry it, once cutting has been completed, to an unloading region 51a, available for pick-up by the means 23 and 24 for transferring the cut panels to the edging centers 13 and 14.

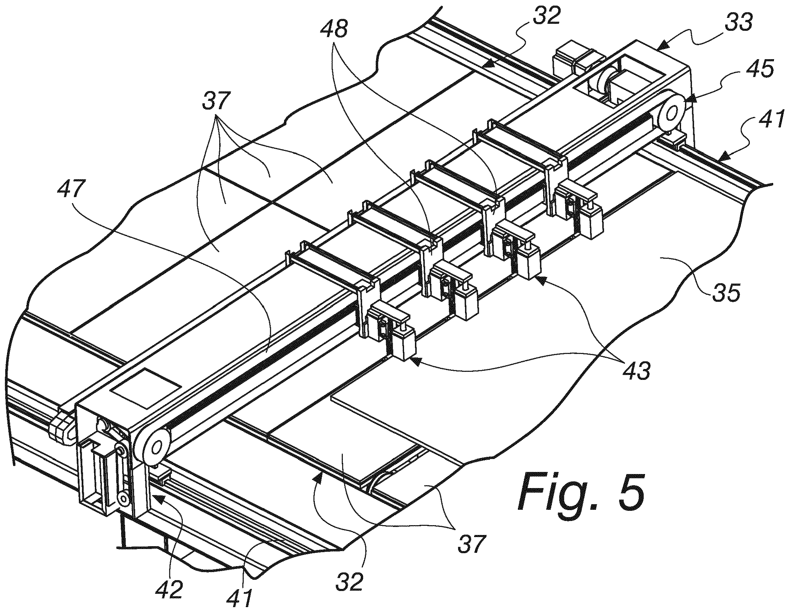

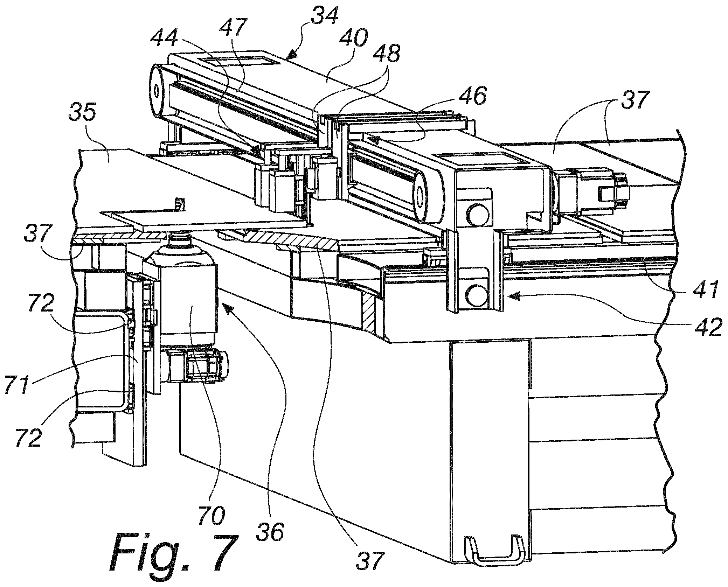

The means 45 and 46 for moving the grip clamps 43 and 44 are constituted, in the present embodiment, by a motorized belt 47, visible in Figures 5, 6 and 7, and a transport flange 48 for each clamp 43 and 44, with the clamps 43 and 44 being fixed to the corresponding transport flange.

Each flange 48 carries reversible means of coupling to the motorized belt 47, constituted for example by a clamp 52 gripping the motorized belt 47 proper and mounted on the flange 48 and the jaws 53 and 54 of which can be seen in Figure 6.

Thus alternatively a flange, or a plurality of flanges, at the choice of the designer, is or are coupled to the motorized belt, and the motorized belt 47 is actuated so as to move the clamps carried by the coupled flanges to a new grip position, according to the technical requirements of the moment.

The gripping clamp 52 is actuated during opening and closure of its jaws 53 and 54 by a pneumatic linear actuator, not shown, which can be of conventional type.

The reference numeral 55 designates means of sliding on a guide, which are associated with each flange 48; such means 55 of sliding on a guide comprise a slider 67 which is arranged to slide on a guide bar 68 and means 69 of locking the slider to the guide bar, in order to stabilize the position of the clamp 43 with respect to the sliding portal 39 that carries it.

Each grip clamp, for example a grip clamp 43 as shown in Figure 6, comprises:
- a first, lower jaw 56, constituted for example by a plate-like element, adapted to be arranged below an edge 58 of a panel 35 to be moved,
- a second, upper jaw 57, constituted for example by a presser body, adapted to press from above the same edge 58 of the panel 35 that is affected from below by the first jaw 56,
- means for moving the first jaw 56,
- means for moving the second jaw 57.

The means for moving the first jaw 56 are constituted by a pneumatic linear actuator 59, fixed to the flange 48.

The stem of the pneumatic linear actuator 59 supports a plate 60 which extends in a cantilever fashion from the stem in order to support a bar 61 which in turn supports, at the lower end, the first jaw 56.

On the bar 61 there are, on two opposite faces, a first guide 62 for a translating slider 63 fixed to the pneumatic linear actuator 59, and a second guide 64 for a second translating slider 65 fixed to the presser body that defines the second jaw 57.

The means for moving the second jaw 57 are constituted by a further pneumatic linear actuator 66 the stem of which is fixed to the plate 60 and the body of which is the presser body that defines the second jaw 57.

The second translating slider 65 is thus associated with the means for moving the second jaw 57.

Figure 6 shows for the purposes of example the operation of the grip clamps, in particular of the grip clamp 43, the operation of the other grip clamps 44 being the same.

When the panel 35 is loaded on the work table 32, and therefore on the sliding panels 37, the panel 35 is supported by the bristles 38 of the sliding panels 37.

In order to grip an edge 58 of the panel 35 the clamp 43 is positioned proximate to the edge 58, and then the first jaw 56 is pushed downwardly to compress the bristles 38 until they descend fully below the edge 58.

The clamp 43 is then made to advance by way of a movement of the sliding portal 39 in the direction X, so that the first jaw 56 is arranged below the edge 58.

Then the first jaw 56 is raised until it touches the edge 58 without lifting it, and at the same time the second jaw 57 is lowered in order to determine the gripping of the edge 58 while keeping the panel 35 resting on the bristles 38 of the sliding panels 37.

At this point the sliding portal 39 is moved toward the cutting means 36; the bristles 38, which are elastically deformable, bend at the passage of the first jaw 56 which is immersed in them, and then return to the original, substantially vertical position when the first jaw is moved away.

The cutting means 36 are constituted by a vertical axis mill 70, mounted on a motorized slide 71 adapted to slide on two supporting guides 72, the motorized slide 71 and supporting guides 72 defining the means for movement of the cutting means in a direction Y which is transverse to the direction X of advancement of the loaded panels.

Operation of the cutting machine 11 is the following.

The panel 35 once loaded on the work table 32 is pushed by way of the first sliding portal 39, and its grip clamps 43, toward the cutting means 36.

Once the cutting operation has begun, the panel 35 is gripped by the clamps 44 of the second sliding portal 40, following the machining thereof together with the first sliding portal 39.

The movement of the cutting means 36 and of the two sliding portals 39 and 40 is coordinated so as to obtain the desired outline for the final piece obtained by the machining of the panel 35.

The finished piece is released from the clamps 44 of the second portal 40 on an unloading region of the work table 32, available to be picked up by the means 23 and 24 for transferring the cut panels to the edging centers, 13 and 14.

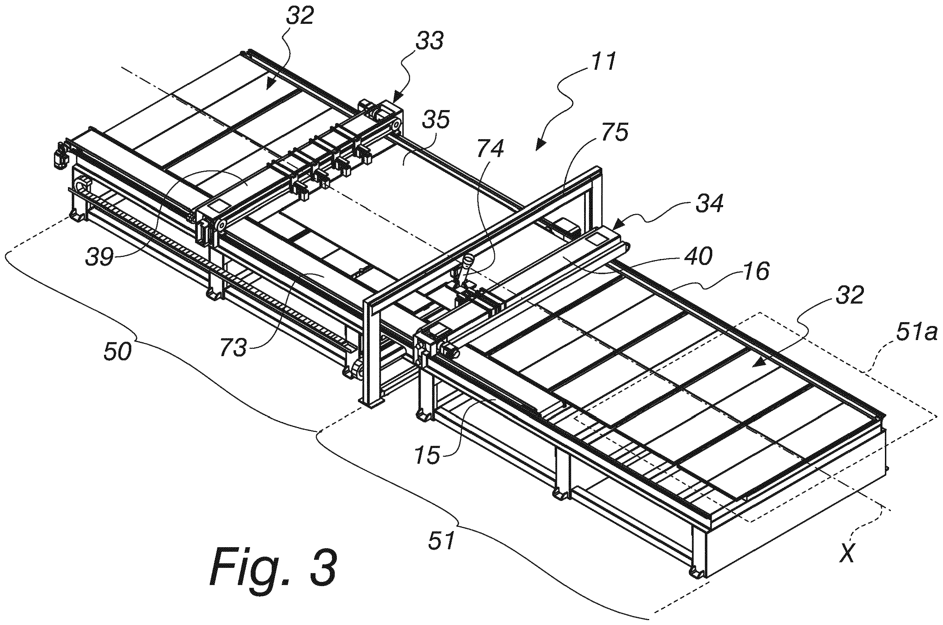

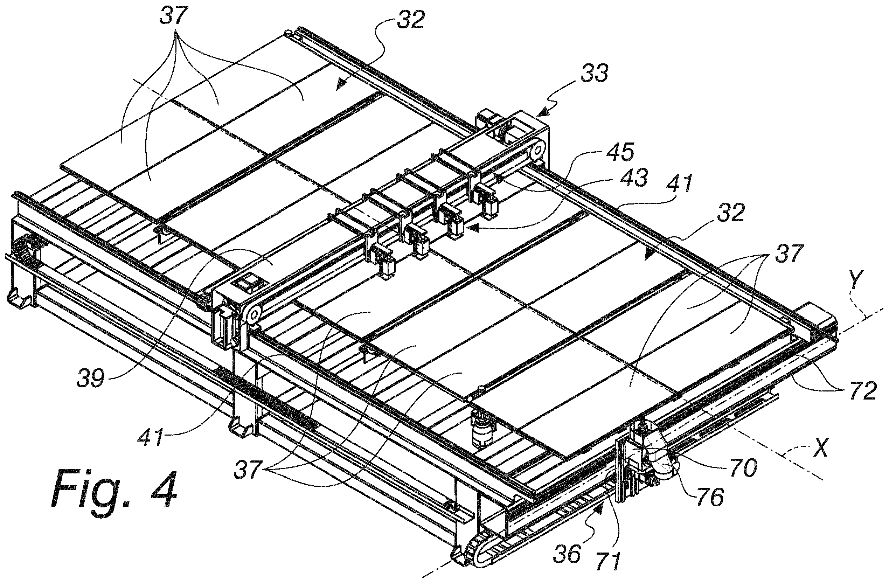

The cutting machine 11 comprises a lateral conveyor belt 73 for unloading the shavings, an upper aspiration device 74, as in Figure 3, arranged so as to operate above the panel being processed, supported by a fixed portal 75, and a lower aspiration device 76, integral with the electric spindle of the cutting means 36, as in Figure 4.

The upper aspiration device 74 is moved synchronously with the lower aspiration device 76, by way of a cable-based kinematic mechanism, not shown for the sake of simplicity, arranged inside the fixed portal 75 which supports the upper aspiration device 74.

The two edging centers 13 and 14, each one adjacent to one side of two opposite sides 15 and 16 of the same cutting machine 11, each comprise, as mentioned, two consecutive work tables, respectively 17 and 18, 19 and 20, and single edging means 21 and 22 which are adapted to serve both the work tables 17, 18, 19, 20 of the respective edging center 13 and 14.

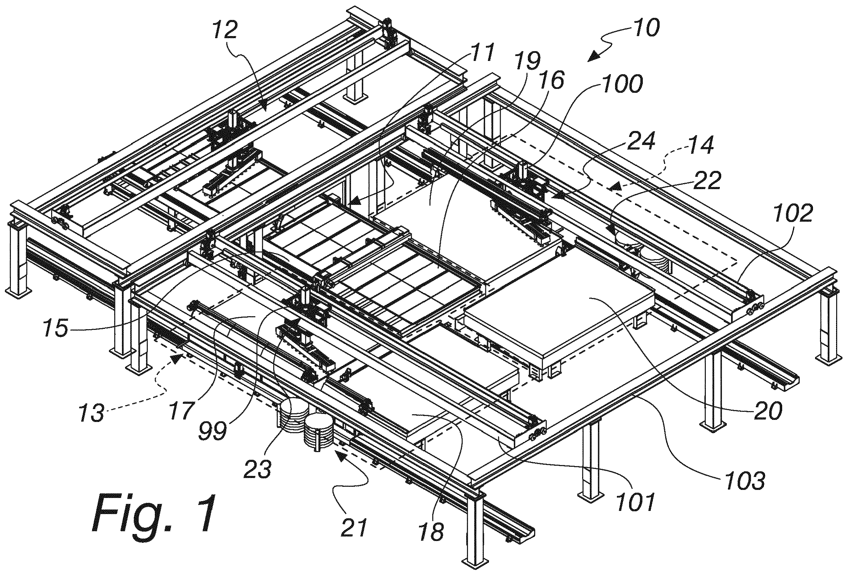

The work tables 17, 18, 19 and 20 are divided into first work tables 17 and 19 and second work tables 18 and 20, as in Figure 1.

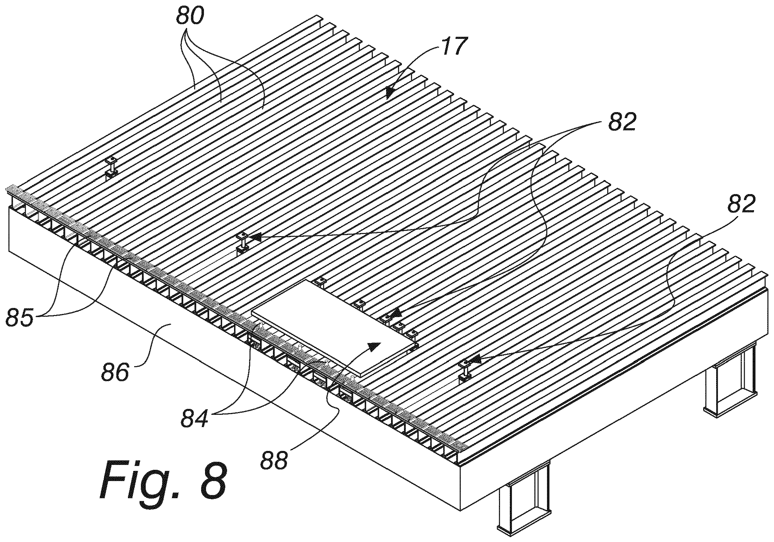

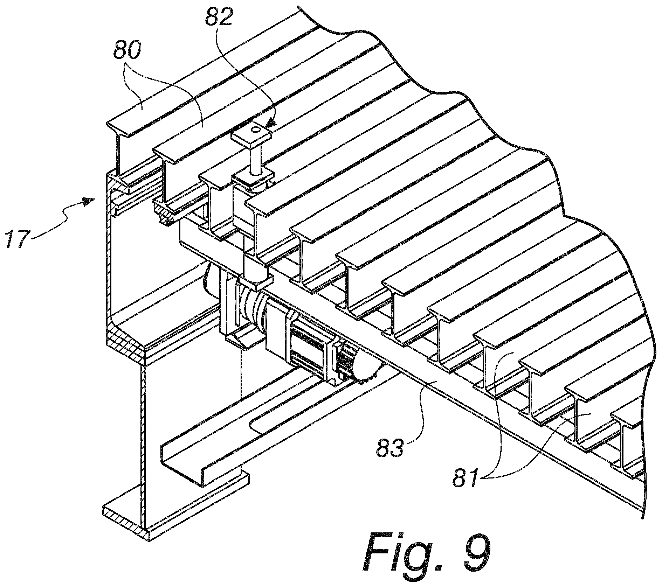

A first work table 17, shown for the purposes of example in Figures 8 and 9, is dedicated to the support of the semi-finished pieces for the edging of the long sides.

The first work table 17 is constituted by a series of profiles 80 arranged side-by-side, which between them define channels 81 for the sliding of panel-gripping clamps 82.

The panel-gripping clamps 82 are carried by a crossmember 83, motorized, which is adapted to carry translationally the clamps 83 in the channels 81, toward or away from the panel being processed.

The profiles 80 are covered by brush strips 85 on which the panel being processed rests.

The first work table also comprises retractable abutment protrusions 84 which are adapted to push the panel to be processed against the clamps in order to ensure the precision of the gripping of the latter.

The retractable abutment protrusions 84 are supported by means for their retractable movement, below the resting surface of the panels.

The clamps 83 are also carried by means that enable their movement up and down, so as to also be able to translate below the resting surface, leaving the latter free to receive a new panel to be processed, with consequent speeding up of the loading times.

The clamps 83 push and carry the panel to be processed toward the processing side 86 of the first work table 17, i.e. the side where the edging means 21 operate.

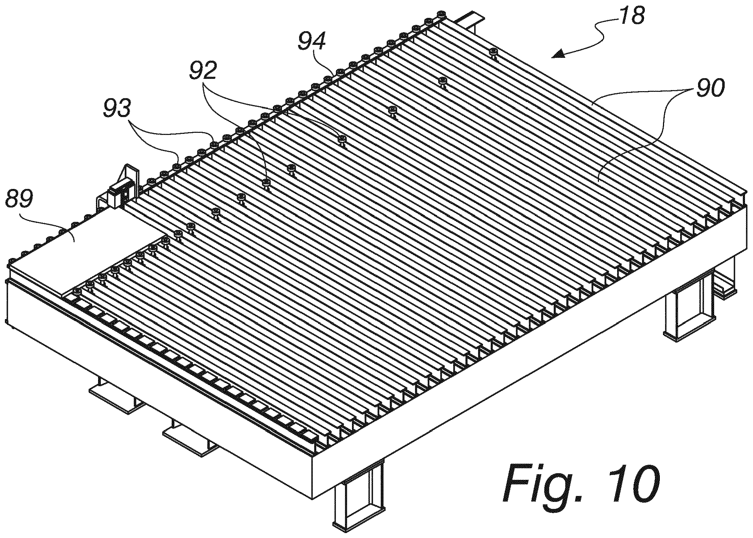

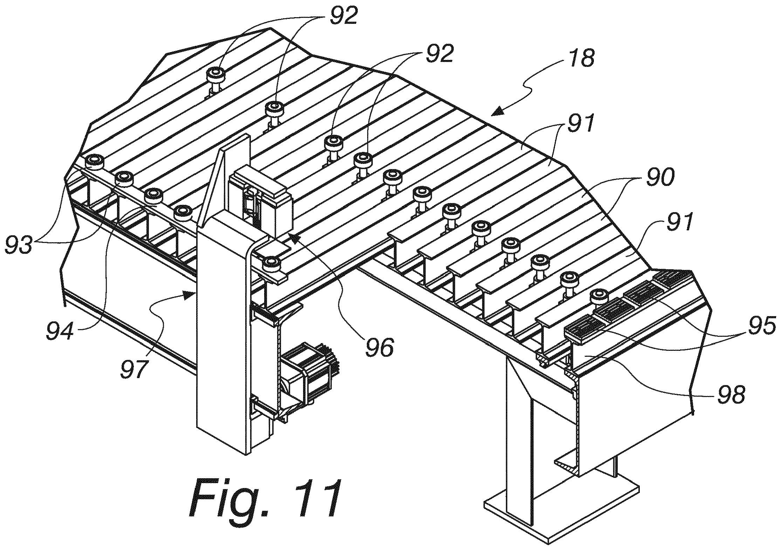

A second work table 18, shown for the purposes of example in Figures 10 and 11, is dedicated to the support of the semi-finished pieces for the edging of the short sides.

The second work table 18 is constituted by a series of profiles 90 arranged side-by-side, which between them define channels 91 for the sliding of elements 92 for pushing a panel, arranged on the table, toward abutment elements 93 which are fixed to a supporting edge 94, of the second work table 18, for supporting the panel being processed.

The pushers 92 and the abutment elements 93 are constituted by idle wheels adapted to allow the sliding without friction against them of the semi-finished panel.

The profiles 90 are covered by brush strips 95 on which the panel being processed rests.

The second work table 18 is provided with a grip and movement clamp 96 mounted on a motorized slide 97 arranged so as to translate at the supporting edge 94; such motorized slide 97 is designed to carry the panel being processed toward the processing side 98, i.e. the side of the second work table 18 that faces the edging means 21.

The single edging means, 21 and 22, are, for example, each constituted by a fixture as disclosed in Italian patent no. 1392522 by Essetre Holding Srl, filed on December 31, 2008, and should be understood as being of known type.

The machining sides 86 and 98 of the first and second work tables 17 and 18 of a same edging center 21, and similarly the opposite edging center 22, are aligned so that the single edging means 21 and 22 respectively, with a same pass, operate consecutively both on one long side of a first panel being machined 88, arranged on the first work table 17, and also on one short side of a second panel being processed 89, arranged on the second work table 18.

The means 23 and 24 for transferring the cut panels to the edging centers, 13 and 14, and for transferring a partially edged panel from a first work table 17 and 19 to the other, second work table 18 and 20 of the same edging center 13 and 14, are constituted by two Cartesian manipulators, a first manipulator 99 for a first edging center 13 and a second manipulator 100 for the second edging center 14.

The Cartesian manipulators 99 and 100 translate on a corresponding movable crossmember 101 and 102, which in turn can slide on a single frame 103, on which both of such movable crossmembers 101 and 102 slide.

The Cartesian manipulators 99 and 100, in the manner of the Cartesian manipulator 25 of the means 12 for loading panels, have a vertical arm that supports a sucker-carrying frame by way of a rotoidal joint.

The means 23 and 24 for transferring the cut panels to the edging centers, 13 and 14, and to the corresponding work tables operate as follows.

A semi-finished panel, once the machining has been finished on the work table 32 of the cutting machine 11, is taken from the second region 51 of such work table 32 by way of a Cartesian manipulator 99 or 100 and placed thereby on a first work table 17 or 19 of an edging center 13 or 14; the semi-finished panel is placed with one of its long sides directed toward the corresponding edging means 21 or 22.

The first work table 17 or 19 automatically moves the semi-finished panel in order to arrange it for the operation of the edging means.

After execution of the edging operation of such first long side, the corresponding Cartesian manipulator 99 or 100 picks up the semi-finished panel and rotates it by 180°, placing it once again on the corresponding first work table 17 or 19 for the edging of the second long side.

After execution of the edging of the second long side, the same semi-finished panel is moved by way of the same Cartesian manipulator 99 or 100 onto the nearby second work table 18 or 20, with a first short side directed toward the corresponding edging means.

With the same Cartesian manipulator 99 or 100, a second, new, semi-finished panel is picked up and placed on the first work table 17 or 19, left free by the previous first semi-finished panel which has been moved to the second work table 18 or 20.

When the first semi-finished panel on the second work table 18 or 20 and the second semi-finished panel on the first work table 17 and 19 are positioned correctly for the edging of the respective sides to be edged, the edging means, with a single pass, then machine first a side of a first semi-finished panel and then a side of the second semi-finished panel.

This occurs obviously in both the edging centers 13 and 14.

In this manner the apparatus 10 according to the invention can edge up to four panels simultaneously.

The finished panels are then unloaded from the second work tables 18 and 20 with means which can be of conventional type.

In practice it has been found that the invention fully achieves the intended aim and objects.

In particular, with the present invention an automated apparatus has been devised which makes it possible to contain the production costs of a finished panel, thanks to the sharing of the edging means for two work tables in the same edging center, and of the means for transferring the cut panels to the edging centers and for transferring a partially edged panel from one work table to the other work table of the same edging center, thanks to which numerous movements are executed for each edging center with a single Cartesian manipulator.

Furthermore, with the invention an automated apparatus has been devised which makes it possible to eliminate the stockrooms of semi-finished products, thanks to the continuous machining of the panels from the blank state up to complete edging.

Moreover, with the invention an automated apparatus has been devised which enables a major reduction of the costs of labor, thanks to the high degree of automation of the cutting machine 11, and of the means for transferring the panels, and also of the work tables of the edging centers.

Furthermore, with the invention an automated apparatus has been devised which can be installed in a relatively contained area, thanks to the peculiar arrangement of the work tables and of the edging means of the edging centers.

Furthermore, with the invention an automated apparatus has been devised which is capable of machining a plurality of panels simultaneously, as explained previously.

Moreover, with the invention an automated apparatus has been devised which is flexible in use and in terms of machined volumes.

Furthermore, with the invention a machine has been devised for cutting panels made of wood-like material, which is integrated in such automated processing apparatus.

Such cutting machine 11 is capable of moving and cutting blank panels in any direction and sense, coordinating the movements of the grip clamps, of the sliding portals on which the clamps are mounted, and of the cutting means.

The same cutting machine 11 positions the cut panels in a region where Cartesian manipulators of the edging centers are available.

The invention, thus conceived, is susceptible of numerous modifications and variations, within the scope of the appended claims.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An automated apparatus (10) for processing panels made of wood-like material, the apparatus comprising:
- a machine (11) for the longitudinal and transverse cutting to size of a blank panel,
- means (12) for loading blank panels on said cutting machine (11); **characterized by**
- two edging centers (13, 14), each one adjacent to one side of two opposite sides (15, 16) of said cutting machine (11), each edging center (13, 14) comprising two consecutive work tables (17, 18, 19, 20) and single edging means (21, 22) adapted to serve both work tables (17, 18, 19, 20),
- means (23, 24) for transferring the cut panels to said edging centers (13, 14) and for transferring a partially edged panel from one work table (17, 19) to the other work table (18, 20) of the same edging center (13, 14).

2. The automated apparatus according to claim 1, **characterized in that** said means (12) for loading blank panels on said cutting machine (11) comprise a Cartesian manipulator (25) on a portal (26), the vertical arm (27) of which supports a sucker-carrying frame (28) by way of a rotoidal joint (29).

3. The apparatus according to one or more of the preceding claims, **characterized in that** said machine (11) for the longitudinal and transverse cutting to size of a blank panel comprises a work table (32) with a mainly longitudinal extension, means (33, 34) for moving a panel in a longitudinal direction of extension (X) of the work table (32), and cutting means (36), supported by means for their movement in a direction (Y) transverse to the advancement direction (X) of the loaded panels.

4. The apparatus according to one or more of the preceding claims, **characterized in that** said cutting means (36) are constituted by a vertical axis mill (70), mounted on a motorized slide (71) which is adapted to slide on two supporting guides (72).

5. The apparatus according to one or more of the preceding claims, **characterized in that** a first work table (17, 19) is dedicated to the support of the semi-finished pieces for the edging of the long sides, a second work table (18, 20) being dedicated to supporting the semi-finished pieces for the edging of the short sides.

6. The apparatus according to one or more of the preceding claims, **characterized in that** said first work table (17, 19) is constituted by a series of profiles (80) arranged side-by-side, which between them define channels (81) for the sliding of panel-gripping clamps (82), said panel-gripping clamps (82) being carried by a motorized crossmember (83) which is adapted to carry translationally the clamps (83) in the channels (81), toward or away from the panel being processed, said first work table (17, 19) also comprising retractable abutment protrusions (84) adapted to push the panel to be processed against the clamps in order to ensure the precision of their grip.

7. The apparatus according to one or more of the preceding claims, **characterized in that** said second work table (18, 20) is constituted by a series of profiles (90) arranged side-by-side, which between them define channels (91) for the sliding of elements (92) for pushing a panel, arranged on the table, toward abutment elements (93) which are fixed to a supporting edge (94) of the second work table (18, 20), said second work table (18, 20) having a grip and movement clamp (96) mounted on a motorized slide (97) arranged so as to translate at said supporting edge (94) for the panel being processed, said motorized slide (97) being designed to carry the panel being processed toward the processing side (98), i.e., the side of the second work table (18, 20) that faces the edging means (21).

8. The apparatus according to one or more of the preceding claims, **characterized in that** said means (23, 24) for transferring the cut panels to said edging centers (13, 14) and for transferring a partially edged panel from a first work table (17, 19) to the other, second work table (18, 20) of the same edging center (13, 14) are constituted by two Cartesian manipulators (99, 100), which translate on a corresponding movable crossmember (101, 102), which in turn can slide on a single frame (103), on which both of said movable crossmembers (101, 102) slide.

9. An apparatus according to claim 1, wherein said machine (11) comprises a work table (32) with a mainly longitudinal extension, means (33, 34) for moving a panel in a longitudinal direction of extension (X) of the work table (32), and cutting means (36), supported by means for their movement in a direction (Y) transverse to the advancement direction (X) of the loaded panels.

10. The apparatus according to claim 9, **characterized in that** said work table (32) is constituted by a plurality of mutually adjacent sliding panels (37), each sliding panel (37) being constituted by elastically deformable bristles (38).

11. The apparatus according to claims 9 and 10, **characterized in that** said means (33, 34) for moving a panel loaded on the work table (32) comprise:
- two sliding portals (39, 40), a first, entry portal (39) for a panel to be processed and a second, exit portal (40) for a cut panel, which rest on guides (41) for translation in the direction (X) of the length of said work table (32) and are moved on said translation guides (41) by way of motorized actuator means;
- a plurality of grip clamps (43, 44), each one of which is mounted on the corresponding sliding portal (39, 40) with means (45, 46) for their movement along said sliding portal.

12. The apparatus according to claims 9 to 11, **characterized in that** said means (33, 34) for moving a panel, first means (33) are arranged in a first region (50) of the work table (32), which is in front of the cutting means (36), and are designed to push the loaded panel toward the cutting means (36) and to accompany it in the same advancement direction during processing; second means (34) being arranged in a second region (51) of the work table (32), which is to the rear of the cutting means (36), and being designed to entrain the loaded panel away from the cutting means (36) and to accompany it in the same advancement direction during processing.

13. The apparatus according to claims 9 to 12, **characterized in that** said second means (34) are designed to entrain a loaded panel away from the cutting means (36) in order to carry it, once cutting has been completed, to an unloading region (51a), available for pick-up by the means (23, 24) for transferring the cut panels to said edging centers (13, 14).

## Patentansprüche

1. Eine automatisierte Vorrichtung (10) zur Verarbeitung von Tafeln aus holzähnlichen Werkstoffen, wobei die Vorrichtung Folgendes umfasst:
- eine Maschine (11) zum Zurechtschneiden einer rohen Tafel in Längs- und in Querrichtung,
- Mittel (12) zum Beladen der Schneidemaschine (11) mit rohen Tafeln;
**gekennzeichnet durch**
- zwei Kantenbeschneidezentren (13, 14), die jeweils an eine Seite der beiden gegenüberliegenden Seiten (15, 16) der Schneidemaschine (11) angrenzen, wobei jedes Kantenbeschneidezentrum (13, 14) zwei aufeinanderfolgende Werktische (17, 18, 19, 20) und einzelne Kantenbeschneidemittel (21, 22) umfasst, die ausgebildet sind, um beide Werktische (17, 18, 19, 20) zu bedienen,
- Mittel (23, 24) zum Übertragen der geschnittenen Tafeln an die Kantenbeschneidezentren (13, 14) und zum Überführen einer teilweise an den Kanten beschnittenen Tafel von einem Werktisch (17, 19) zum anderen Werktisch (18, 20) desselben Kantenbeschneidezentrums (13, 14).

2. Die automatisierte Vorrichtung gemäß Anspruch 1, **dadurch gekennzeichnet, dass** die Mittel (12) zum Beladen der Schneidemaschine (11) mit rohen Tafeln einen kartesischen Manipulator (25) auf einem Portal (26) umfassen, dessen vertikaler Arm (27) über ein Rotoidgelenk (29) einen Saugnapf tragenden Rahmen (28) trägt.

3. Die Vorrichtung gemäß einem oder mehreren der obigen Ansprüche, **dadurch gekennzeichnet, dass** die Maschine (11) zum Zurechtschneiden einer rohen Tafel in Längs- und in Querrichtung Folgendes umfasst: einen Werktisch (32) mit hauptsächlich länglicher Ausdehnung, Mittel (33, 34) zum Bewegen einer Tafel in länglicher Ausdehnungsrichtung (X) des Werktischs (32) und Schneidemittel (36), getragen von Mitteln zur Bewegung derselben in eine Richtung (Y) quer zur Vorschubrichtung (X) der aufgeladenen Tafeln.

4. Die Vorrichtung gemäß einem oder mehreren der obigen Ansprüche, **dadurch gekennzeichnet, dass** die Schneidemittel (36) aus einer Hochachsenmühle (70), montiert auf einem motorisierten Läufer (71), bestehen, der ausgebildet ist, um auf zwei tragenden Führungen (72) zu gleiten.

5. Die Vorrichtung gemäß einem oder mehreren der obigen Ansprüche, **dadurch gekennzeichnet, dass** ein erster Werktisch (17, 19) zum Tragen der halbfertigen Stücke zur Kantenbeschneidung der langen Seiten dient, wobei ein zweiter Werktisch (18, 20) zum Tragen der halbfertigen Stücke zur Kantenbeschneidung der kurzen Seiten dient.

6. Die Vorrichtung gemäß einem oder mehreren der obigen Ansprüche, **dadurch gekennzeichnet, dass** der erste Werktisch (17, 19) aus einer Reihe nebeneinander angeordneter Profile (80) besteht, die zwischen sich Kanäle (81) zum Gleiten von Tafelgreifklemmen (82) bestimmen, wobei die Tafelgreifklemmen (82) von einem motorisierten Querträger (83) getragen werden, der ausgebildet ist, um die Klemmen (83) in den Kanälen (81) zu der Tafel, die bearbeitet wird, oder von ihr fort zu überführen, wobei der erste Werktisch (17, 19) auch einziehbare Widerlagervorsprünge (84) umfasst, die ausgebildet sind, um die zu verarbeitende Tafel gegen die Klemmen zu drücken, um die Präzision ihres Griffs sicherzustellen.

7. Die Vorrichtung gemäß einem oder mehreren der obigen Ansprüche, **dadurch gekennzeichnet, dass** der zweite Werktisch (18, 20) aus einer Reihe nebeneinander angeordneter Profile (90) besteht, die zwischen sich Kanäle (91) zum Gleiten von Elementen (92) zum Schieben einer Tafel, positioniert auf dem Tisch, zu Widerlagerelementen (93) hin bestimmen, die an einer tragenden Kante (94) des zweiten Werktischs (18, 20) befestigt sind, wobei der zweite Werktisch (18, 20) eine Greif- und Bewegungsklemme (96) hat, die an einem motorisierten Läufer (97) montiert ist, der angeordnet ist, um sich an der tragenden Kante (94) für die Tafel, die bearbeitet wird, zu bewegen, wobei der motorisierte Läufer (97) dazu dient, die Tafel, die bearbeitet wird, zur Bearbeitungsseite (98), d. h. zu der Seite des zweiten Werktischs (18, 20), die den Kantenbeschneidemitteln (21) zugewandt ist, zu transportieren.

8. Die Vorrichtung gemäß einem oder mehreren der obigen Ansprüche, **dadurch gekennzeichnet, dass** die Mittel (23, 24) zum Überführen der geschnittenen Tafeln an die Kantenbeschneidezentren (13, 14) und zum Überführen einer teilweise beschnittenen Tafel von einem ersten Werktisch (17, 19) zu dem anderen, zweiten Werktisch (18, 20) desselben Kantenbeschneidezentrums (13, 14) aus zwei kartesischen Manipulatoren (99, 100) bestehen, die sich auf einem entsprechenden beweglichen Querträger (101, 102) bewegen, welcher wiederum auf einem einzigen Rahmen (103) gleiten kann, auf dem beide bewegliche Querträger (101, 102) gleiten.

9. Eine Vorrichtung gemäß Anspruch 1, wobei die Maschine (11) Folgendes umfasst: einen Werktisch (32) mit einer Ausdehnung hauptsächlich in Längsrichtung, Mittel (33, 34) zum Bewegen einer Tafel in länglicher Ausdehnungsrichtung (X) des Werktischs (32) und Schneidemittel (36), getragen von Mitteln zur Bewegung derselben in eine Richtung (Y) quer zur Vorschubrichtung (X) der aufgeladenen Tafeln.

10. Die Vorrichtung gemäß Anspruch 9, **dadurch gekennzeichnet, dass** der Werktisch (32) aus einer Vielzahl nebeneinander angeordneter Schiebetafeln (37) besteht, wobei jede Schiebetafel (37) aus elastisch verformbaren Borsten (38) besteht.

11. Die Vorrichtung gemäß den Ansprüchen 9 und 10, **dadurch gekennzeichnet, dass** die Mittel (33, 34) zum Bewegen einer auf den Werktisch (32) geladenen Tafel Folgendes umfassen:
- zwei Gleitportale (39, 40), ein erstes, Eintritts-Portal (39) für eine zu verarbeitende Tafel und ein zweites, Austritts-Portal (40) für eine geschnittene Tafel, die auf Führungen (41) zur Translation in die Richtung (X) der Länge des Werktischs (32) aufliegen und durch motorisierte Antriebsmittel auf den Translationsführungen (41) bewegt werden;
- eine Vielzahl von Greifklemmen (43, 44), die jeweils auf dem entsprechenden Gleitportal (39, 40) montiert sind, mit Mitteln (45, 46) für ihre Bewegung entlang dem Gleitportal.

12. Die Vorrichtung gemäß den Ansprüchen 9 bis 11, **dadurch gekennzeichnet, dass** die Mittel (33, 34) zum Bewegen einer Tafel, erste Mittel (33) in einem ersten Bereich (50) des Werktischs (32) angeordnet sind, der vor den Schneidemitteln (36) liegt, und dazu dienen, die beladene Tafel zu den Schneidemitteln (36) zu schieben und während der Verarbeitung in dieselbe Vorschubrichtung zu begleiten; wobei zweite Mittel (34) in einem zweiten Bereich (51) des Werktischs (32) angeordnet sind, der hinter den Schneidemitteln (36) liegt, und dazu dienen, die beladene Tafel von den Schneidemitteln (36) fortzuziehen und während der Verarbeitung in dieselbe Vorschubrichtung zu begleiten.

13. Die Vorrichtung gemäß den Ansprüchen 9 bis 12, **dadurch gekennzeichnet, dass** die zweiten Mittel (34) dazu dienen, eine beladene Tafel von den Schneidemitteln (36) fortzuziehen, um sie nach Abschluss des Schneidevorgangs in einen Entladebereich (51a) zu transportieren, verfügbar zur Aufnahme durch die Mittel (23, 24) zur Überführung der geschnittenen Tafeln an die Kantenbeschneidezentren (13, 14).

## Revendications

1. Appareil automatisé (10) de traitement de panneaux composés de matière ligneuse, ledit appareil comprenant :
- une machine (11) pour la découpe longitudinale et transversale aux dimensions d'un panneau vierge,
- un moyen (12) de chargement des panneaux vierges sur ladite machine de découpe (11),
**caractérisé par**
- deux centres de délignage (13, 14), chacun étant adjacent à un côté de deux côtés opposés (15, 16) de ladite machine de découpe (11), chaque centre de délignage (13, 14) comprenant deux tables porte-pièce (17, 18, 19, 20) consécutives et un moyen de délignage (21, 22) unique conçu pour desservir les deux tables porte-pièce (17, 18, 19, 20),
- un moyen (23, 24) de transfert des panneaux découpés vers lesdits centres de délignage (13, 14) et de transfert d'un panneau partiellement déligné d'une table porte-pièce (17, 19) à l'autre table porte-pièce (18, 20) du même centre de délignage (13, 14).

2. Appareil automatisé selon la revendication 1, **caractérisé en ce que** ledit moyen (12) de chargement des panneaux vierges sur ladite machine de découpe (11) comprend un manipulateur cartésien (25) sur un portique (26), dont le bras vertical (27) supporte un châssis support de tuyau d'aspiration (28) au moyen d'un joint rotoïde (29).

3. Appareil selon l'une ou plusieurs des revendications précédentes, **caractérisé en ce que** ladite machine (11) pour la découpe longitudinale et transversale aux dimensions d'un panneau vierge comprend une table porte-pièce (32) munie d'une extension principalement longitudinale, un moyen (33, 34) de déplacement d'un panneau dans un sens longitudinal d'extension (X) de la table porte-pièce (32), et des moyens de découpe (36), supportés par des moyens permettant le déplacement dans un sens (Y) transversal par rapport au sens de l'avance (X) des panneaux chargés.

4. Appareil selon l'une ou plusieurs des revendications précédentes, **caractérisé en ce que** ledit moyen de découpe (36) est constitué d'une machine à bois à axe vertical (70), montée sur une glissière motorisée (71), qui est conçue pour coulisser sur deux guides supports (72).

5. Appareil selon l'une ou plusieurs des revendications précédentes, **caractérisé en ce qu'**une première table porte-pièce (17, 19) est dédiée au supportage des pièces semi-finies pour le délignage des côtés longs, une seconde table porte-pièce (18, 20) étant dédiée au supportage des pièces semi-finies pour le délignage des côtés courts.

6. Appareil selon l'une ou plusieurs des revendications précédentes, **caractérisé en ce que** ladite première table porte-pièce (17, 19) est constituée d'une série de profils (80) agencés les uns à côté des autres, qui définissent, entre eux, des canaux (81) pour le coulissement de pinces de serrage de panneaux (82), lesdites pinces de serrage de panneaux (82) étant portées par une entretoise motorisée (83) qui est conçue pour porter en translation les pinces (83) dans les canaux (81), pour les rapprocher ou les éloigner du panneau en cours de traitement, ladite première table porte-pièce (17, 19) comprenant également des protubérances de butée rétractables (84), conçues pour pousser le panneau qui doit être traité contre les pinces afin d'assurer la précision de leur saisie.

7. Appareil selon l'une ou plusieurs des revendications précédentes, **caractérisé en ce que** ladite seconde table porte-pièce (18, 20) est constituée d'une série de profils (90) agencés les uns à côté des autres, qui définissent, entre eux, des canaux (91) pour le coulissement d'éléments (92) destinés à pousser un panneau, agencé sur la table, vers des éléments de butée (93) qui sont fixés sur un bord de support (94) de la seconde table porte-pièce (18, 20), ladite seconde table porte-pièce (18, 20) possédant également une pince de serrage et de déplacement (96) montée sur une glissière motorisée (97) agencée de manière à effectuer une translation au niveau dudit bord support (94) pour le panneau en cours de traitement, ladite glissière motorisée (97) étant conçue pour porter le panneau en cours de traitement vers le côté traitement (98) c'est-à-dire le côté de la seconde table porte-pièce (18, 20) qui fait face au moyen de délignage (21).

8. Appareil selon l'une ou plusieurs des revendications précédentes, **caractérisé en ce que** lesdits moyens (23, 24) de transfert des panneaux découpés vers lesdits centres de délignage (13, 14) et de transfert d'un panneau partiellement déligné d'une première table porte-pièce (17, 19) à l'autre, seconde table porte-pièce (18, 20) du même centre de délignage (13, 14) sont constitués de deux manipulateurs cartésiens (99, 100), qui effectuent une translation sur une entretoise mobile (101, 102) correspondante, qui à son tour peut coulisser sur un châssis unique (103), sur lequel coulissent les deux dites entretoises mobiles (101, 102).

9. Appareil selon la revendication 1, dans lequel ladite machine (11) comprend une table porte-pièce 32 munie d'une extension essentiellement longitudinale, des moyens (33, 34) permettant de déplacer un panneau dans un sens longitudinal d'extension (X) de la table porte-pièce (32), et du moyen de découpe (36), supporté par un moyen permettant leur déplacement dans un sens (Y) transversal au sens de l'avance (X) des panneaux chargés.

10. Appareil selon la revendication 9, **caractérisé en ce que** ladite table porte-pièce (32) est constituée d'une pluralité de panneaux coulissants adjacents les uns aux autres (37), chaque panneau coulissant (37) étant constitué de poils (38) déformables élastiquement.

11. Appareil selon les revendications 9 et 10, **caractérisé en ce que** lesdits moyens (33, 34) de déplacement d'un panneau chargé sur la table porte-pièce (32) comprennent :
- deux portiques coulissants (39, 40), un premier portail d'entrée (39) pour un panneau qui doit être traité, et un second portail de sortie (40) pour un panneau découpé, qui reposent sur des guides (41) de translation dans le sens (X) de la longueur de ladite table porte-pièce (32) et qui se déplacent sur lesdits guides de translation (41) grâce à des moyens d'actionnement motorisés ,
- une pluralité de pinces de saisie (43, 44) dont chacune est montée sur le portique coulissant (39, 40) correspondant, avec des moyens (45, 46) pour leur déplacement le long dudit portique coulissant.

12. Appareil selon les revendications 9 à 11, **caractérisé en ce que**, parmi lesdits moyens (33, 34) de déplacement d'un panneau, un premier moyen (33) est agencé dans une première région (50) de la table porte-pièce (32), qui se trouve devant le moyen de découpe (36), et qui est conçu pour pousser le panneau chargé vers le moyen de découpe (36) et pour l'accompagner dans le même sens d'avance au cours du traitement, un second moyen (34) est agencé dans une seconde région (51) de la table porte-pièce (32), c'est-à-dire vers l'arrière du moyen de découpe (36), et qui est conçu pour éloigner le panneau du moyen de découpe (36) et pour l'accompagner dans le même sens d'avance au cours du traitement.

13. Appareil selon les revendications 9 à 12, **caractérisé en ce que** ledit second moyen (34) est conçu pour éloigner un panneau du moyen de découpe (36) afin de le porter, une fois que la découpe est terminée, jusqu'à une région de déchargement (51a), accessible à la reprise par les moyens (23, 24) de transfert des panneaux découpés jusqu'auxdits centres de délignage (13, 14).
